Europäisches Patentamt

European Patent Office

Office européen des brevets

(11) Numéro de publication: **0 250 281 B1**

(12) **FASCICULE DE BREVET EUROPEEN**

(45) Date de publication de fascicule du brevet: **11.03.92**  (51) Int. Cl.⁵: **G01J 5/00**

(21) Numéro de dépôt: **87401129.9**

(22) Date de dépôt: **20.05.87**

(54) **Capteur de mesure de la temperature de surface d'un corps.**

(30) Priorité: **21.05.86 FR 8607200**

(43) Date de publication de la demande:
**23.12.87 Bulletin  87/52**

(45) Mention de la délivrance du brevet:
**11.03.92 Bulletin  92/11**

(84) Etats contractants désignés:
**BE CH DE ES FR IT LI NL**

(56) Documents cités:
**DE-A- 3 204 072**
**US-A- 2 981 913**
**US-A- 4 019 381**
**US-A- 4 063 095**

**OPTICAL ENGINEERING, vol. 25, no. 4, avril
1986, pages 596-601, Bellingham, Washington, US; D.P. DEWITT: "Inferring temperature
from optical radiation measurements"**

**INSTRUMENTS AND CONTROL SYSTEMS,
vol. 53, no. 10, octobre 1980, pages 49-52,
Radnor, Pennsylvania, US; J.E. GALBRAITH:
"Applying and selecting portable IR thermometers"**

(73) Titulaire: **COMMISSARIAT A L'ENERGIE ATO-
MIOUE Etablissement de Caractère Scientifique Technique et Industriel
31/33, rue de la Fédération
F-75015 Paris(FR)**

(72) Inventeur: **Royer, Denis
Bâtiment D-Les 3 Moulins
F-13100 Aix en Provence(FR)**
Inventeur: **Verdier, Bernard
Les Balcons d'Entremont-Bât.8
F-13090 Aix en Provence(FR)**

(74) Mandataire: **Mongrédien, André et al
c/o BREVATOME 25, rue de Ponthieu
F-75008 Paris(FR)**

## Description

La présente invention a pour objet un capteur servant à mesurer la température de surface d'un objet sans contact avec celui-ci.

Il existe actuellement des appareils pour mesurer la température de surface d'un objet sans qu'il y ait de contact avec celui-ci. Ces appareils sont appelés "radiothermomètres" car ils sont sensibles aux rayonnements émis par la surface de l'objet, notamment les rayonnements infrarouges. Dans certains de ces dispositifs, le rayonnement émis par l'objet est focalisé sur un détecteur après être passé à travers une lentille perméable aux infrarouges et un filtre infrarouge. Le rayonnement est interrompu périodiquement par un modulateur. Ainsi, périodiquement, le rayonnement du modulateur s'ajoute au rayonnement de l'objet. La tension de sortie du détecteur est donc une tension alternative dont l'amplitude est déterminée par la différence entre le rayonnement de l'objet et celui du modulateur. A ce signal s'ajoute une tension fonction de la température du modulateur de sorte que le signal de sortie de la sonde de température ne dépend plus que du rayonnement de l'objet.

Si un tel dispositif permet de connaître facilement la température de l'objet, il est d'une réalisation compliquée, notamment à cause de la présence du modulateur et des dispositifs d'actionnement et de réglage de ce dernier, ce qui en augmente le coût. De plus, il se dérègle plus ou moins rapidement, ce qui nécessite des réétalonnages fréquents.

La présente invention a pour but de remédier à ces inconvénients en proposant un capteur de température de la surface d'un objet sans contact avec celui-ci plus simple, et donc moins coûteux, que les dispositifs de l'art antérieur.

Selon la principale caractéristique du capteur de mesure objet de l'invention, celui-ci comporte :
- une sonde de mesure de température ;
- un miroir comprenant une plaque ayant une face frontale dirigée vers l'objet et qui est aussi la face frontale du miroir, et une face arrière ; ladite plaque étant réalisée en un matériau qui absorbe les radiations de longueur d'onde déterminée et qui est transparent aux radiations de longueur d'onde différente ; et une couche réfléchissante déposée sur ladite face arrière.

Selon l'invention, il comporte des moyens de protection thermique de la sonde, et la plaque consiste en une lame de verre dont l'épaisseur est comprise entre 100 et 2 000 micromètres, pour que la longueur d'onde des radiations absorbées soit supérieure à 4 micromètres, et que la longueur d'onde des radiations transmises soit inférieure à 4 micromètres.

C'est la lame de verre qui absorbe les radiations de longueur d'onde supérieure à 4 micromètres et qui est transparente aux radiations de longueur d'onde inférieure à 4 micromètres. Autrement dit, la lame de verre absorbe les radiations susceptibles de la chauffer et est transparente aux autres radiations. Ces dernières traversent la lame, se réfléchissent sur la couche réfléchissante et ressortent de la masse de verre.

L'expression "face externe" utilisée dans la présente description pour le miroir ou la lame de verre désigne la face du miroir ou de la lame qui est située en regard de l'objet dont on veut mesurer la température de surface, tandis que l'expression "face interne" désigne la face de ces éléments opposée à la face externe.

Quant à la sonde de mesure de température placée sur la face interne du miroir, ce peut être tout appareil connu servant à mesurer la température d'un corps, par exemple un thermocouple, une thermopile, une sonde à résistance, etc.

L'épaisseur de la lame de verre est comprise de préférence entre 400 et 600 micromètres. En effet, l'épaisseur de la lame de verre doit être optimisée. Une épaisseur trop importante entraîne une inertie de l'appareil et une plus grande incertitude sur la mesure. Inversement, une épaisseur trop faible conduit d'une part à une plus grande fragilité et, d'autre part, à des longueurs d'onde de coupure trop élevées, laissant passer une partie des radiations infrarouges que l'on veut mesurer.

Selon un autre aspect de l'invention, les moyens de protection thermique de la sonde comprennent :
- un matériau isolant qui isole la face arrière du miroir ; et
- un boîtier contenant ce matériau isolant, le boîtier ayant une paroi antérieure dont le miroir constitue une partie.

De préférence, la paroi antérieure du boîtier présente une face externe plane et la face externe du miroir est également plane et se trouve dans le plan ainsi défini.

Le fait que la face externe du miroir et la face externe de la paroi antérieure du boîtier se trouvent dans le même plan évite la rétention d'eau qui pourrait se produire dans la zone de jonction entre les deux éléments, en cas d'utilisation extérieure, et les erreurs de mesure qui pourraient en résulter.

Enfin, selon un dernier aspect de l'invention, le miroir est disposé de manière à être entouré de tous côtés par le reste de la paroi antérieure du boîtier. Par exemple, si le boîtier est cylindrique et sa paroi antérieure circulaire, le miroir est également circulaire et se trouve au centre du boîtier. On évite ainsi les effets de bord, le miroir étant utilisé dans sa totalité et se comportant comme la partie centrale d'un miroir plus vaste.

L'invention apparaîtra mieux à la lecture de la descripton qui va suivre, donnée à titre d'exemple purement illustratif et nullement limitatif, en référence aux dessins annexés, dans lesquels :

- la figure 1 est une vue schématique en perspective et en coupe de l'ensemble d'un capteur conforme à l'invention, et
- la figure 2 est une vue schématique en coupe à échelle agrandie montrant la constitution du miroir utilisé dans le capteur.

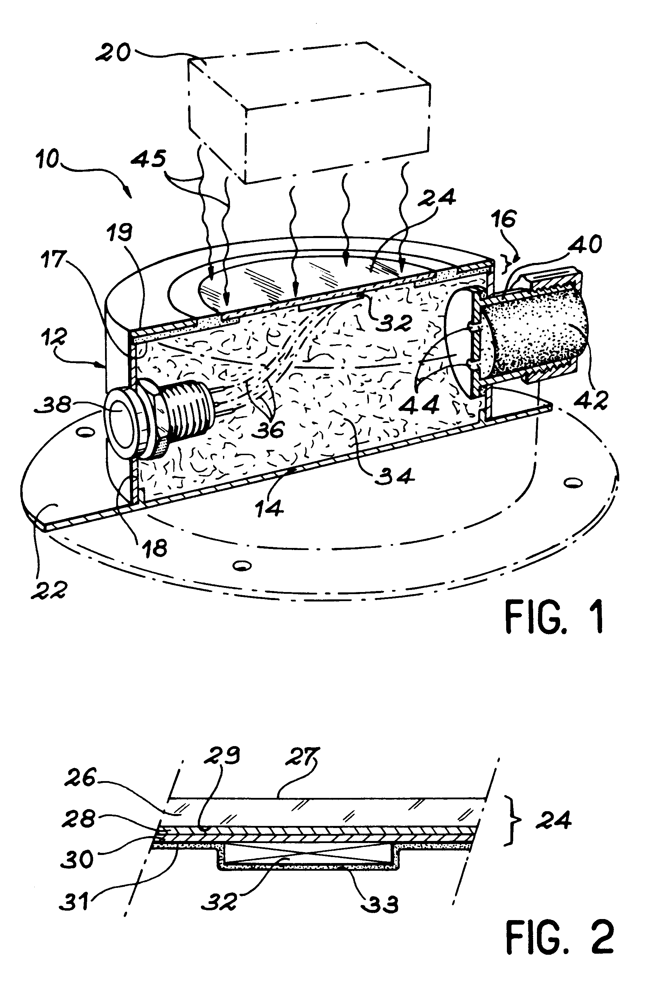

Si l'on se reporte à la figure 1, on voit que le capteur objet de l'invention, portant la référence générale 10, se compose essentiellement d'un boîtier 12 qui, dans l'exemple décrit ici, se compose d'une paroi postérieure plane 14 et d'une paroi antérieure 16 plane et parallèle à la paroi 14, ces deux parois étant reliées par une partie cylindrique 18. La paroi antérieure 16 est celle qui se trouve du côté de l'objet 20 dont on veut mesurer la température de surface. Eventuellement, le boîtier peut comporter une bride 22 servant à le fixer sur un support quelconque. Dans le cas particulier décrit ici, le diamètre de la paroi 14 est supérieur à celui de la partie cylindrique 18 et c'est la périphérie de la paroi 14 qui constitue la bride 22, mais on ne sortirait pas du cadre de l'invention en utilisant d'autres dispositions. Dans l'exemple repésenté ici, le boîtier est cylindrique, sa paroi antérieure 16 est circulaire et la partie centrale de cette paroi est occupée par un miroir 24 également circulaire.

Si l'on se reporte à la figure 2, on voit que ce miroir se compose d'abord d'une plaque de verre 26 ayant une face externe 27 et une face interne 29. La face externe 27 est celle qui est en regard de l'objet 20 et elle constitue la face externe du miroir. Sur la face interne 29 de la plaque 26 est déposée une couche réfléchissante 28, par exemple une couche d'argent, éventuellement recouverte d'une couche de protection 30, par exemple une couche de cuivre. De préférence, l'épaisseur de la couche d'argent est supérieure ou égale à 30 micromètres. Une sonde de température 32 est placée en contact avec la couche de cuivre 30 qui est ensuite recouverte par une couche de protection 33, par exemple une couche de vernis. La sonde 32 est donc en contact avec la face interne 31 du miroir, c'est-à-dire la face de celui-ci opposée à la face externe 27.

A titre d'essai, on a réalisé un capteur dans lequel le miroir était constitué d'une lame de verre de 570 micromètres d'épaisseur recouverte successivement, sur une de ses faces, d'une couche d'argent, d'une couche de cuivre et d'une couche de vernis. Le verre utilisé avait les caractéristiques suivantes :

- longueur d'onde de coupure : 4,5 micromètres,
- qualité optique : 7 à 8 franges,
- teneur en $Fe_2O_3$ telle que le coefficient d'extinction K soit inférieur à 0,24 cm$^{-1}$,
- transmission dans le visible supérieure à 90%,
- transmission dans l'infrarouge inférieure à 5%.

La réflectivité de l'argenture était de 0,95 et le coefficient de réflexion totale de 0,04.

Si l'on se reporte à nouveau à la figure 1, on voit que l'intérieur du boîtier 12 est rempli d'un matériau isolant thermiquement 34, qui remplit pratiquement tout l'espace intérieur du boîtier et qui peut être en contact avec la sonde. Le rôle du matériau 34 est de protéger cette dernière ainsi que la face arrière du miroir contre les variations thermiques de l'environnement dans lequel se trouvent le capteur et l'objet à étudier. Ce matériau peut être, par exemple, de la mousse de polyuréthane. La sonde 32 est reliée par des fils 36 à un connecteur 38 monté sur la paroi 18 du boîtier et permettant de la relier à un appareil de mesure (non représenté).

On voit encore sur la figure 1 qu'on a monté sur le boîtier 12 un logement 40 dont une partie se trouve à l'intérieur du boîtier et une autre à l'extérieur de celui-ci. L'espace interne du logement 40 est rempli d'un matériau dessicant 42 et est en communication avec l'espace interne du boîtier par des trous tels que 44. Le rôle du matériau déssicant 42 est d'extraire l'humidité qui pourrait se trouver à l'intérieur du boîtier et dans le matériau isolant 34 afin de préserver les qualités d'isolation de ce dernier.

La paroi antérieure 16 du boîtier présente une face interne 17 du côté intérieur du boîtier et une face externe 19. De préférence, la face externe 19 est plane et la face externe 27 du miroir 24 constitue une partie de la face 19, de préférence la partie centrale. On évite ainsi les effets de bord qui pourraient se produire si le miroir 24 constituait lui-même la totalité de la paroi 16. Le miroir 24 se trouvant au centre de cette dernière, la paroi 16 se comporte comme un miroir de plus grande dimension dont on n'utiliserait que la partie centrale. D'autre part, selon un mode de réalisation préféré, la face externe 19 de la paroi 16 est plane et la face externe 27 du miroir 24 se trouve dans le même plan. On évite ainsi la rétention de gouttes d'eau qui pourrait se produire dans la zone de contact entre le miroir et le reste de la paroi 16, si le miroir faisait saillie ou était en retrait par rapport à la face externe 19 de la paroi 16.

La face externe 19 de la paroi 16 est réalisée de préférence en un matériau non conducteur de la chaleur et réfléchissant, par exemple en polypropylène blanc. Quant aux parois 14 et 18 du boîtier, elles doivent être de couleur claire, afin de réfléchir les rayonnements extérieurs au boîtier. On peut par exemple les réaliser en aluminium et leur donner une faible épaisseur, afin de diminuer l'inertie thermique du boîtier. De préférence, on choisit pour celui-ci un diamètre égal à un diamètre standard pour les tubes en aluminium, ce qui permet de diminuer encore le coût de fabrication du capteur.

Le fonctionnement du capteur objet de l'invention est le suivant :

On amène le capteur au voisinage de l'objet 20 dont on veut mesurer la température de surface, la paroi antérieure 16 du boîtier se trouvant du côté de l'objet et la paroi 14 du côté opposé. Les radiations émises par l'objet 20, symbolisées par les flèches 45, arrivent sur le miroir 24 et pénètrent dans la lame de verre 26. Comme ce dernier est en un matériau qui absorbe les radiations de longueur d'onde supérieure à 4 micromètres, c'est-à-dire pratiquement tout l'infrarouge, le verre s'échauffe. Quant aux autres radiations, elles pénètrent dans la masse de verre, traversent celle-ci jusqu'à ce qu'elles rencontrent la couche d'argent, se réfléchissent et sortent de la masse de verre puisque le verre utilisé est transparent à ces dernières radiations.

Comme les couches d'argent et de cuivre sont très minces et bonnes conductrices de la chaleur, c'est la température du verre qui est mesurée par la sonde 32. Il est connu que la température d'équilibre d'une vitre exposée à l'environnement et isolée sur sa face arrière (dans l'exemple décrit ici, l'isolation est assurée par le matériau 34 et le boîtier 12) est celle de l'émetteur infrarouge qu'elle voit, c'est-à-dire de l'objet 20 dont on veut mesurer la température, au coefficient de convection et au flux de courte longueur d'onde reçue près (il s'agit du flux de longueur d'onde inférieure à 4 micromètres). On peut donc, connaissant la température et les caractéristiques de la lame de verre, ainsi que la température ambiante mesurée indépendamment par tout moyen connu, déterminer la température de surface de l'objet. De tels calculs sont connus des spécialistes et ne seront pas décrits ici.

Le capteur objet de l'invention présente des avantages intéressants dont le principal est sa légèreté et sa simplicité, ce qui entraîne un faible coût de fabrication et une grande facilité d'utilisation. De plus, il ne nécessite pas un réétalonnage systématique en fonction de la gamme de températures à mesurer. Quant aux applications, elles sont nombreuses et variées et couvrent tous les domaines d'utilisation des radiothermomètres actuels, par exemple : mesure de la température d'une feuille végétale dans une serre, mesure de la température de surface des glaciers, mesure de la température radiative de parois dans une habitation, mesure de la température de surface sur les installations industrielles, mesure de la température de flammes ou de toute surface rendant difficile une mesure par contact.

Enfin, il est bien entendu que l'invention ne se limite pas au seul mode de réalisation qui vient d'être décrit, mais qu'on peut envisager des variantes sans sortir pour autant du cadre de l'invention, notamment en ce qui concerne la réalisation du miroir et le choix des matériaux constituant celui-ci ainsi que des matériaux constituant le boîtier et le matériau isolant.

## Revendications

1. Capteur de mesure de la température d'un objet (20) comportant :
   - une sonde de mesure de température (32) ;
   - un miroir (24) comprenant une plaque (26) ayant une face frontale (27) dirigée vers l'objet et qui est aussi la face frontale du miroir, et une face arrière (29) ; ladite plaque étant réalisée en un matériau qui absorbe les radiations de longueur d'onde déterminée et qui est transparent aux radiations de longueur d'onde différente ; et une couche réfléchissante (28) déposée sur ladite face arrière (29),
   caractérisé en ce que le capteur comporte des moyens de protection thermique de la sonde, et en ce que la plaque consiste en une lame de verre (26) dont l'épaisseur est comprise entre 100 et 2 000 micromètres, pour que la longueur d'onde des radiations absorbées soit supérieure à 4 micromètres, et que la longueur d'onde des radiations transmises soit inférieure à 4 micromètres.

2. Capteur selon la revendication 1, caractérisé en ce qu'il comporte en outre une couche de protection (30) déposée sur la couche réfléchissante (28).

3. Capteur selon la revendication 1, caractérisé en ce que l'épaisseur de la lame de verre (26) est de préférence comprise entre 400 et 600 micromètres.

4. Capteur selon la revendication 1, caractérisé en ce que les moyens de protection thermique de la sonde comprennent :
   - un matériau isolant (34) qui isole la face arrière du miroir (24), et
   - un boîtier (12) contenant ce matériau isolant (34), le boîtier (12) ayant une paroi antérieure (16) dont le miroir (24) constitue une partie.

**5.** Capteur selon la revendication 4, caractérisé en ce que la paroi antérieure (16) du boîtier (12) présentant une face externe plane (19), la face externe (27) du miroir est également plane et se trouve dans le plan ainsi défini.

**6.** Capteur selon la revendication 4, caractérisé en ce que le miroir (24) est disposé de manière à être entouré de tous côtés par le reste de la paroi antérieure (16) du boîtier (12).

## Claims

**1.** Sensor for measuring the temperature of an object (20) comprising a temperature measuring probe (32), a mirror (24) incorporating a plate (26) having a front face (27) directed towards the object and which is also the front face of the mirror, and a rear face (29), said plate being made from a material which absorbs rays of the given wavelength and which is transparent to rays of a different wavelength, as well as a reflecting layer (28) deposited on said rear face (29), characterized in that the sensor has means for the heat protection of the probe and in that the plate consists of a glass strip (26), whose thickness is between 100 and 2000 micrometres for which the wavelength of the rays absorbed exceeds 4 micrometres and the wavelength of the rays transmitted is below 4 micrometres.

**2.** Sensor according to claim 1, characterized in that it also has a protective layer (30) deposited on the reflecting layer (28).

**3.** Sensor according to claim 1, characterized in that the thickness of the glass strip (26) is preferably between 400 and 600 micrometres.

**4.** Sensor according to claim 1, characterized in that the heat protection means of the probee comprise an insulating material (34) insulating the rear face of the mirror (24) and a box or case (12) containing said insulating material (34), the case (12) having a front wall (16), whereof the mirror (24) constitutes a part.

**5.** Sensor according to claim 4, characterized in that the front wall (16) of the case (12) has a planar outer face (19), the outer face (27) of the mirror also being planar and being located in the thus defined plane.

**6.** Sensor according to claim 4, characterized in that the mirror (24) is positioned in such a way as to be surrounded on all sides by the remainder of the front wall (16) of the case (12).

## Patentansprüche

**1.** Meßfühler der Temperatur eines Gegenstands (20) mit:
einer Temperaturmeßsonde (32);
einem Spiegel (24), der eine Platte (26) aufweist, die eine auf den Gegenstand gerichtete Vorderseite (27) aufweist, und die auch die Vorderseite des Spiegels ist, und eine Rückseite (29) aufweist; wobei die Platte aus einem Material gebildet ist, das die Strahlungen von vorbestimmter Wellenlänge absorbiert, und die für die Strahlungen anderer Wellenlänge durchlässig ist; und eine reflektierende Schicht (28) aufweist, die auf der Rückseite (29) angeordnet ist,
dadurch gekennzeichnet, daß der Meßfühler Wärmeschutzeinrichtungen der Sonde aufweist, und daß die Platte aus einer Glasplatte (26) besteht, deren Dicke zwischen 100 und 200 $\mu$m liegt, damit die Wellenlänge der absorbierten Strahlungen größer als 4 $\mu$m ist, und die Wellenlänge der übertragenen Strahlungen geringer als 4 $\mu$m ist.

**2.** Meßfühler nach Anspruch 1, dadurch gekennzeichnet, daß er weiterhin eine Schutzschicht (30) aufweist, die auf der Reflektionsschicht (28) aufgebracht ist.

**3.** Meßfühler nach Anspruch 1, dadurch gekennzeichnet, daß die Dicke der Glasplatte (26) vorzugsweise zwischen 400 und 600 $\mu$m liegt.

**4.** Meßfühler nach Anspruch 1, dadurch gekennzeichnet, daß die Wärmeschutzeinrichtungen der Sonde aufweisen:
ein isolierendes Material (34), das die Rückseite des Spiegels (24) isoliert, und
ein Gehäuse (12), das dieses isolierende Material (34) enthält, wobei das Gehäuse (12) eine vorherige Seitenwand (16) bildet, von der der Spiegel (24) einen Bereich bildet.

**5.** Meßfühler nach Anspruch 4, dadurch gekennzeichnet, daß die vorherige Seitenwand (16) des Gehäuses (12) eine äußere ebene Fläche (19) aufweist, wobei die Außenseite (27) des Spiegels ebenfalls eben ist und sich in der so definierten Ebene befindet.

**6.** Meßfühler nach Anspruch 4, dadurch gekennzeichnet, daß der Spiegel (24) derart angeordnet ist, daß er von allen Seiten vom Rest der vorherigen Seitenwand (16) des Gehäuses (12) umgeben ist.

FIG. 1

FIG. 2